# EUROPÄISCHE PATENTSCHRIFT

(11) **EP 2 296 886 B1**
(45) Veröffentlichungstag und Bekanntmachung des Hinweises auf die Patenterteilung: **28.09.2011**
(21) Anmeldenummer: 09753638.7
(22) Anmeldetag: 19.05.2009
(51) Int. Cl.: B41F 13/00

(54) **ORTSFESTE RADIALE DRUCKLUFTZUFÜHRUNG**
STATIONARY RADIAL COMPRESSED AIR SUPPLY
AMENÉE D'AIR COMPRIMÉ RADIALE STATIONNAIRE

(30) Priorität: 27.05.2008 DE 102008025222
(43) Veröffentlichungstag der Anmeldung: 23.03.2011
(73) Patentinhaber: Winkler + Dünnebier AG, 56564 Neuwied (DE)
(72) Erfinder: GORCZAK, Piotr, 56566 Neuwied (DE); KLOFT, Antonius, 56244 Hahn am See (DE)
(74) Vertreter: Müller, Gerald Christian
(86) Internationale Anmeldenummer: PCT/EP2009/003570
(87) Internationale Veröffentlichungsnummer: WO 2009/143983

(56) Entgegenhaltungen:
- EP-A- 0 435 164
- EP-A- 1 110 727
- JP-A- 59 019 156
- US-A- 5 255 604

## Beschreibung

### I. Anwendungsgebiet

Die Erfindung betrifft im Allgemeinen eine ortsfeste Druckluftzuführung an eine rotierbare Walze und insbesondere eine radiale Druckluftzuführung an eine/n mit einer Kunststoffhülse zu überziehende/n Druckwalze/Druckzylinder.

### II. Technischer Hintergrund

In einer rotativen Druckmaschine werden heutzutage Druckzylinder eingesetzt, die zur Anpassung an das jeweilige Druckbild mit einer Kunststoffhülse (sog. "Sleeve") überzogen sind. Um diesen Kunststoffsteeve auf den Zylinder aufzubringen, wird der Sleeve beim Aufziehen üblicherweise aufgeweitet, indem Bohrungen in der Mantelfläche der Walze von innen mit Druckluft beaufschlagt werden. Das sich ergebende Luftpolster führt dazu, dass der Sleeve im µm-Bereich aufgeweitet wird und somit über den Druckzylinder gezogen werden kann. Die in diesem Zusammenhang verwendete Druckluft steht üblicherweise unter einem Druck von ca. 5 -10 bar, je nach Abmessungen des Zylinders und Anzahl der Bohrungen.

Nach dem Aufbringen der Sleeves wird die Druckluftzufuhr an die Bohrungen in der Mantelfläche des Zylinders unterbrochen, so dass der Sleeve in seine ursprüngliche, an den Durchmesser des Zylinders angepasste Form zurückkehrt und dann im Folgenden aufgrund der Reibungskräfte zwischen Sleeve und Zylindermantelfläche an dieser schlupflos anliegt.

Ein entsprechendes Aufziehen des Sleeves auf den Druckzylinder findet natürlich im nicht-rotierenden Zustand des Zylinders statt.

Nach den bislang bekannten Systemen zur Zuführung der Druckluft von innen an die Bohrungen in der Mantelfläche des Zylinders weist dieser in seinem inneren wenigstens einen axialen Luftkanal auf. Dieser mündet an einer Stirnseite des Zylinders, wobei die Bohrungen sich von der Mantelfläche des Zylinders radial nach innen bis an den axialen Luftkanal erstrecken und mit diesem in Druckluftverbindung stehen.

Der axiale Luftkanal wird dann üblicherweise axial über seine Mündung auf der Stirnseite des Zylinders mittels einer Druckluftzuführung, beispielsweise einer Pumpe, mit Druckluft beaufschlagt.

Eine derartige axiale Druckluftzuführung hat jedoch verschiedene Nachteile. Zum einen wird die Breite der Druckmaschine aufgrund der sich axial an den Druckzylinder anschließenden Druckluftzufuhr erheblich vergrößert. Auch ist eine axiale Druckluftzufuhr grundsätzlich nur dann möglich, wenn die Stirnfläche des Druckzylinders frei zugänglich ist. Dies ist üblicherweise nur der Fall, falls der Antrieb des Druckzylinders auf radiale Weise, z.B. über Zahnräder oder -riemen erfolgt.

Erfolgt der Antrieb des Druckzylinders jedoch beispielsweise über einen axial montierten Servomotor, so steht die Stirnfläche des Druckzylinders nicht oder nur sehr beschränkt für den Anschluss einer Druckluftzuführung zur Verfügung.

In diesem Fall werden bislang radiale Drehdurchführungen verwendet. Diese haben jedoch ebenfalls mehrere Nachteile. So wird zum einen zusätzlicher Einbauraum benötigt. Andererseits handelt es sich um entsprechend komplizierte und teuere Zukaufteile, die hohe Kosten verursachen und, wenn überhaupt, nur beschränkt an die jeweiligen Bedürfnisse angepasst werden können. Schließlich zeichnen sich diese radialen Drehdurchführungen durch eine begrenzte Lebensdauer aus, da die entsprechenden Dichtungen bei der Rotation des Drehzylinders schleifend an diesem anliegen und somit einem hohem Verschleiß ausgesetzt sind.

US 5 255 604 A zeigt eine Zuführeinrichtung für druckbeaufschlagbare Medien auf einem rotierbaren Zylinder, bei dem ein Druckraum durch einen Boden, zylindrische Seitenwände und einen scheibenförmigen Gummiverschluss gebildet wird. Der Druckraum liegt bei Druckluftzuführung abdichtend am Zylinder an.

EP 0 435 164 A1 lehrt weiterhin eine Druckluftzuführung für eine drehende Walze, die die Walze in Umfangsrichtung umgibt. Hierbei weist die Druckluftzuführung eine Kammer auf, die zwischen zwei Kugellagern angeordnet ist, deren oberer Ring fest ist und deren unterer Ring sich mit der Walze mitdreht. Zwischen Fixierringen und den sich ebenfalls mit der Walze mitdrehenden Kugellagerringen sind Dichtscheiben eingespannt, welche aus gehärtetem Stahl oder aus Kunststoff wie Polyoxymethylen bestehen.

### III. Darstellung der Erfindung

### a) Technische Aufgabe

Es ist daher die Aufgabe der vorliegenden Erfindung, eine ortsfeste radiale Druckluftzuführung an eine rotierbare Walze zu schaffen, die sich durch einen geringen Einbauraum und eine lange Lebensdauer auszeichnet.

### b) Lösung der Aufgabe

Diese Aufgabe wird durch die Merkmale des Anspruchs 1 gelöst. Vorteilhafte Ausführungsformen ergeben sich aus den Unteransprüchen.

Die erfindungsgemäße rotierbare Walzemiteiner ortsfesten radialen Druckluftzuführung weist in ihrer Mantelfläche wenigstens eine mit Druckluft zu beaufschlagende Öffnung auf. Hierbei ist die Walze im axialen Bereich der mit Druckluft zu beaufschlagenden Öffnung, d.h. demjenigen axialen Abschnitt der Mantelfläche der Walze, in dem die Öffnung angeordnet ist, in Umfangsrichtung zumindest abschnittsweise von einem ortsfesten, mit Druck beaufschlagbaren Druckraum umgeben. Erfindungsgemäß ist weiterhin ein Dichtelement vorhanden, das durch Druckluftbeaufschlagung des Druckraums von einer Ruhestellung in eine Dichtstellung und durch Druckentlasten des Druckraums auf Umgebungsdruck von der Dichtstellung in die Ruhestellung bewegbar ist. Hierbei sind das Dichtelement und der Druckraum derart ausgebildet, dass bei in Ruhestellung befindlichem Dichtelement keine Verbindung zwischen der Walze und den Wandungen des Druckraums und somit kein Kontakt zwischen rotierenden und ortsfesten Bauteilen vorliegt, während bei in Dichtstellung befindlichem Dichtelement eine druckdichte Verbindung zwischen den Wandungen des Druckraums und der Walze besteht.

Hierbei weist das Dichtelement wenigstens eine elastisch verformbare Dichtlippe auf, die die erfindungsgemäße Funktion eines Übergangs zwischen Ruhe- und Dichtstellung in Abhängigkeit von den Druckverhältnissen in dem Druckraum übernimmt. Vorzugsweise nimmt die Dichtlippe im nicht elastisch verformten Zustand ihre Ruhestellung ein und verformt sich bei Druckbeaufschlagung des Druckraums elastisch in die Dichtstellung.

Durch das erfindungsgemäß zwei unterschiedliche Stellungen einnehmende Dichtelement sowie eine aneinander angepasste Geometrie des Dichtelements und des Druckraums wird folglich verhindert, dass im rotierenden Zustand der Walze, d.h. im druckfreien Zustand des Druckraums, Bauteile des Druckraums an der Walzenmantelfläche oder an auf dieser angeordneten, rotierenden Bauteilen schleifend anliegen und somit einem hohen Verschleiß ausgesetzt sind.

Besonders bevorzugt umgibt der Druckraum hier in Umfangsrichtung gesehen den entsprechenden axialen Bereich der Walze im Wesentlichen über den gesamten Bereich von 360°, ist also als Ringraum ausgebildet. Auf diese Weise ist sichergestellt, dass die mit Druckluft zu beaufschlagende Öffnung in der Walzenmantelfläche unabhängig von der Drehstellung der Walze vollständig innerhalb des Abdeckungsbereichs des Druckraums zu liegen kommt, so dass in jedem Fall eine wirksame Druckluftzuführung möglich ist.

Alternativ wäre hier jedoch auch denkbar, dass sich der Druckraum nur über einen oder mehrere Winkelabschnitte des Umfangs der Walze erstreckt. Hierbei müsste dann durch entsprechende Steuereinrichtungen sichergestellt werden, dass ein Beaufschlagen des Druckraums nur möglich ist, wenn die zu beaufschlagende Öffnung im Wirkbereich des Druckraums liegt. In diesem Sinne ist eine Druckbeaufschlagung der Walze dann nur in bestimmten Drehstellungen möglich.

Das erfindungsgemäß wirkende Dichtelement kann hierbei sowohl auf der rotierbare Walze, als auch ortsfest, beispielsweise als in den Druckraum integrierte Dichtung angeordnet sein. Vorzugsweise ist das Dichtelement jedoch in Form wenigstens eines umlaufenden Dichtrings auf der Mantelfläche des Walze angeordnet.

Vorteilhafterweise besteht das Dichtelement zumindest teilweise aus einem elastisch verformbaren Material, wie z.B. Nitrilkautschuk (Acrylnitril-Butadien-Kautschuk, auch als NBR bekannt) oder einer anderen natürlichen oder synthetischen Kautschuk- oder Gummiart. Dies hat den Vorteil, dass ein Übergang zwischen der bei Druckbeaufschlagung eingenommenen Dichtstellung und der im druckfreien Zustand eingenommenen Ruhestellung des Dichtelements durch eine druckbedingte elastische Verformung erreicht wird.

Alternativ wäre jedoch auch denkbar, dass das Dichtelement zu diesem Zwecke über starre, mechanisch zwischen den beiden Stellungen bewegbare Bauteile aufweist. Denkbar wären hier schwenkbar gelagerte Ventilartige Klappen oder ähnliches, die mittels einer Vorspannung in die Ruhestellung vorgespannt werden und bei Druckbeaufschlagung des Druckraums in die Dichtstellung umschwenken.

Um zu erreichen, dass das Dichtelement beim Beaufschlagen des Druckraums mit Druckluft selbständig in die Dichtstellung übergeht, kann das Dichtelement eine Wirkfläche aufweisen, die derart angeordnet ist, dass sie bei einem Druckunterschied zwischen dem Innendruck des Druckraums und dem Umgebungsdruck mit einer Kraft beaufschlagt wird, die zu einem elastischen Auslenken der Wirkfläche und somit zum Übergang in die Dichtstellung führt.

Bei einer bevorzugten Ausführungsform weist das Dichtelement eine Anlagefläche auf, mit der es in seiner Dichtstellung dichtend an einer Wandung des Druckraums anliegt. Hierbei ist eine flächige Anlage vorteilhaft, um eine möglichst optimale Dichtfunktion zu gewährleisten.

Um den zum Einbau der erfindungsgemäßen Druckluftzuführung benötigten zusätzlichen Bauraum so gering wie möglich zu halten, ist der Druckraum in einer besonders bevorzugten Ausführungsform zwischen zwei Wälzlagern der Walze angeordnet.

In diesem Sinne kann der Druckraum besonders vorteilhafterweise in die Axialverstellungseinheit der Walze integriert sein, so dass die Walze in jedem axialen Einstellzustand mit Druckluft beaufschlagbar ist. Mit anderen Worten ausgedrückt, vollzieht der Druckraum in diesem Fall jede axiale Verstellung der Walze mit, so dass immer gewährleistet ist, dass die mit Druckluft zu beaufschlagende Öffnung in der Mantelfläche der Walze im Abdeckungsbereich des Druckraums verbleibt.

Vorzugsweise verfügt die Walze in dem axialen Bereich, der von dem Druckraum umgeben ist, auf ihrer Mantelfläche über mehrere, vorteilhafterweise gleichmäßig über den Umfang verteilte Öffnungen, die mit Druckluft zu beaufschlagen sind.

Um die Beaufschlagung mit Druckluft innerhalb des Walzenkörpers an die gewünschten Stellen weiterzuleiten, erstreckt sich die mit Druckluft zu beaufschlagende Öffnung von der Mantelfläche der Walze aus radial nach innen an einen axialen Luftkanal. Dieser Luftkanal führt dann die Druckluft auf übliche Weise den in einem anderen axialen Abschnitt der Walze angeordneten Bohrungen zu, mittels derer der aufzuziehende Sleeve zum Aufweiten mit Druckluft beaufschlagt wird.

### c) Ausführungsbeispiele

Eine bevorzugte beispielhafte Ausführungsform einer erfindungsgemäßen radialen ortsfesten Druckluftzuführung wird im folgenden für den Fall eines Druckzylinders und unter Bezugnahme auf die Figuren beschrieben. Es zeigen:
- Fig. 1: eine Schnittansicht einer Lagerung eines Druckzylinders, die eine Aus- führungsform der erfindungsgemäßen Druckluftzuführung aufweist;
- Fig. 2: eine vergrößerte Detailansicht der Druckluftzuführung aus Figur 1, wo- bei das Dichtelement in seiner Ruhestellung dargestellt ist;
- Fig. 3: eine vergrößerte Detailansicht der Druckluftzuführung aus Figur 2, wo- bei das Dichtelement in seiner Dichtstellung dargestellt ist und
- Fig. 4: eine Detaildarstellung aus Figur 2, die die Anordnung des Dichtele- ments auf dem Druckluftzylinder zeigt.

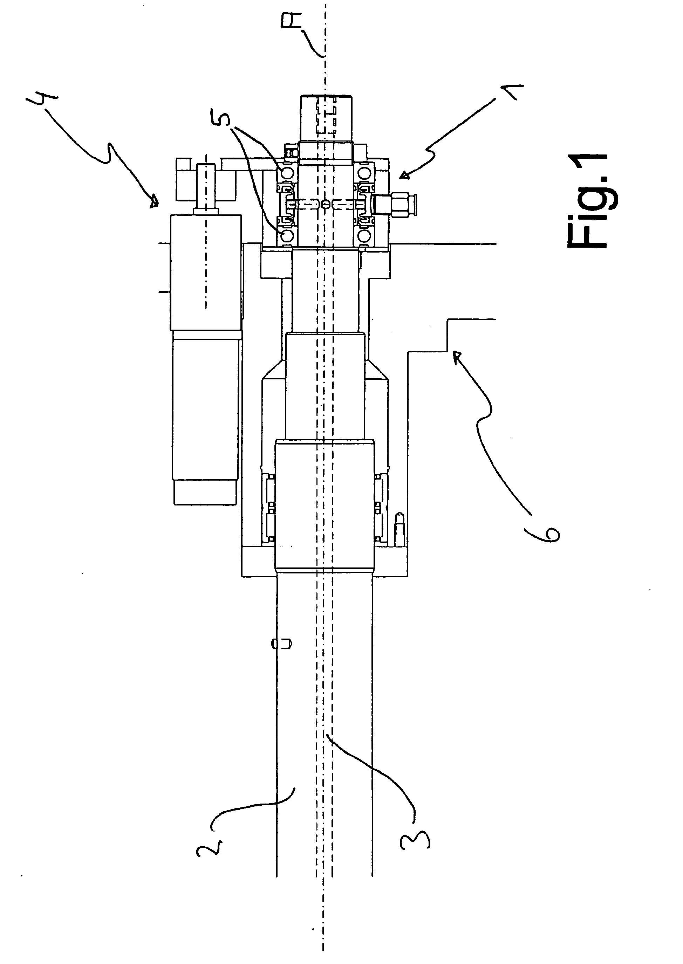

Figur 1 zeigt eine Übersichtdarstellung einer Lagerung für einen Druckzylinder 2, der eine Ausführungsform der erfindungsgemäßen Druckluftzuführung 1 aufweist. Der Druckzylinder 2 ist auf übliche Weise über mehrere Lager in einem Maschinenrahmen 6 gelagert. Insbesondere weist der Druckzylinder 2 eine Axialverstellungseinheit 4 auf, die eine axiale Verlagerung des Zylinders 1 relativ zum Maschinenrahmen 6 ermöglicht.

Zentral innerhalb des Druckzylinders 2 ist ein axial verlaufender Luftkanal 3 angeordnet. Dieser Kanal 3 steht mit mehreren (nicht dargestellten) Bohrungen in der Mantelfläche des Zylinders 2 in Druckluftverbindung. Bei einer Beaufschlagung des axialen Luftkanals 3 mit Druckluft wird diese an die Bohrungen übermittelt und kann dann dazu verwendet werden, einen auf den Zylinder 2 aufzuziehenden Kunststoffsleeve mittels eines Luftpolster aufzuweiten, um den Aufziehvorgang zu ermöglichen.

Die erfindungsgemäße radiale ortsfeste Druckluftzuführung 1 ist in der vorliegenden Ausführungsform in der Axialverstellungseinheit 4 zwischen den beiden Wälzlagern 5 angeordnet.

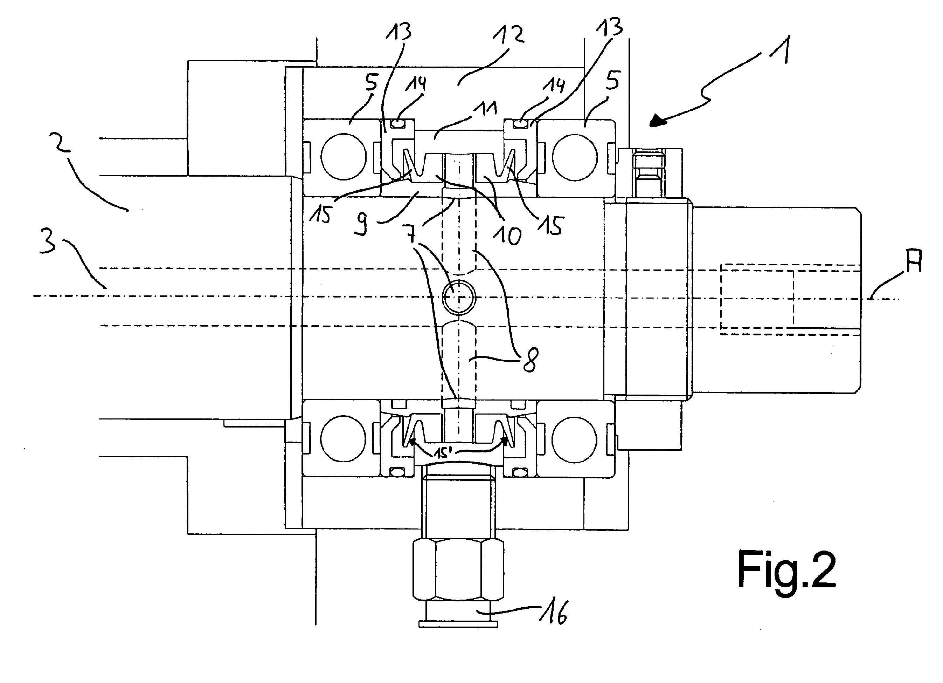

Wie in Figur 2 genauer zu erkennen ist, weist die Mantelfläche des Druckzylinders 2 in dem axialen Bereich zwischen den beiden Wälzlagern 5 vier gleichmäßig über den Umfang des Zylinders 2 verteilte Öffnungen 7 auf, die über sich radial nach innen erstreckende Bohrungen 8 mit dem axialen Luftkanal 3 in Druckluftverbindung stehen.

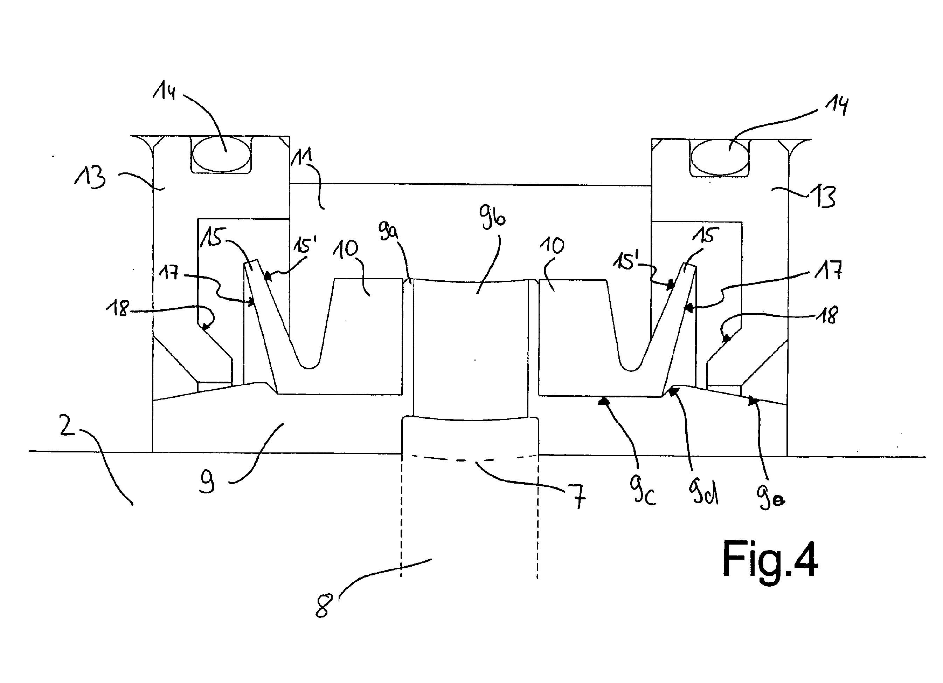

Auf der Mantelfläche des Druckzylinders 2 ist in dem zwischen den Wälzlagern 5 liegenden Bereich eine Buchse 9 angeordnet, die schlupflos mit dem Druckzylinder rotiert. Wie in Figur 4 dargestellt, weist die Buchse 9 im Querschnitt gesehen im mittleren Bereich ihrer Außenseite eine Wulst 9a auf. Die Wulst 9a weist hierbei mit den Öffnungen 7 fluchtende Durchgangsbohrungen 9b auf.

Von der Wulst 9a aus erstreckt sich die Außenseite der Buchse 9 im Querschnitt gesehen beidseitig zunächst über einen Abschnitt 9c parallel zur Achse A des Druckzylinders 2 nach außen. An diesen Abschnitt schließt sich eine radial nach außen verlaufende Stufe 9d an, die von einem geradlinigen, radial leicht nach innen verlaufenden Abschnitt 9e gefolgt wird.

Auf der Buchse 9 ist auf beiden Seiten des zentralen Wulst 9a jeweils im Bereich 9c ein Dichtring 10 aus Acrylnitril-Butadien-Kautschuk (NBR) aufgezogen. Die Dichtringe 10 rotieren schlupflos gemeinsam mit der Buchse 9 und somit dem Druckzylinder 2.

Die Dichtringe werden jeweils auf der einen Seite von der jeweiligen Wand des Wulst 9a und auf der anderen Seite von der Stufe 9d auf der Außenseite der Buchse 9 gegen eine axiale Bewegung gesichert.

Weiterhin sind der zwischen den Wälzlagern 5 liegende axiale Abschnitt des Zylinders 2 und somit auch die Dichtringe 10 von einem ortsfesten Ringraum als erfindungsgemäßen Druckraum 11 umgeben. Der Druckraum 11 wird hierbei radial von dem die Wälzlager aufnehmenden Bauteil 12 der Axialverstellungseinheit 4 begrenzt. Die axial gesehen seitlichen Wandungen des Druckraums 11 werden durch Ringelemente 13 gebildet, die wiederum an den Wälzlagern 5 und dem Bauteil 12 anliegen. Insbesondere sind hier zwischen den Ringelementen 13 und dem Bauteil 12 jeweils O-Ringe 14 angeordnet, um eine Druckluftabdichtung zwischen diesen Bauteilen zu gewährleisten.

Das erfindungsgemäße Dichtelement wird in der vorliegenden Ausführungsform durch zwei Dichtlippen 15 gebildet, die vorliegend als integraler Bestandteil des jeweiligen Dichtrings 10 ausgebildet sind und somit ebenfalls aus dem elastischen Material Acrylnitril-Butadien-Kautschuk (NBR) bestehen.

In Figur 2 sowie in Figur 4 sind die Dichtlippen 15 in ihrer Ruhestellung dargestellt, d.h. der Druckraum 11 ist nicht mit Druckluft beaufschlagt. Die die seitlichen Wandungen des Druckraums 11 bildenden Ringelemente 13 sind hierbei so dimensioniert, dass sie von den Dichtringen 10 sowie den Abschnitten 9e der auf der Druckzylindermantelfläche angeordneten Buchse 9 geringfügig beabstandet sind, d.h. dass bei in Ruhestellung befindlichen Dichtlippen 15 kein Kontakt zwischen den Ringelementen 13 und dem Dichtring 10 bzw. den Dichtlippen 15 oder der Buchse 9 besteht.

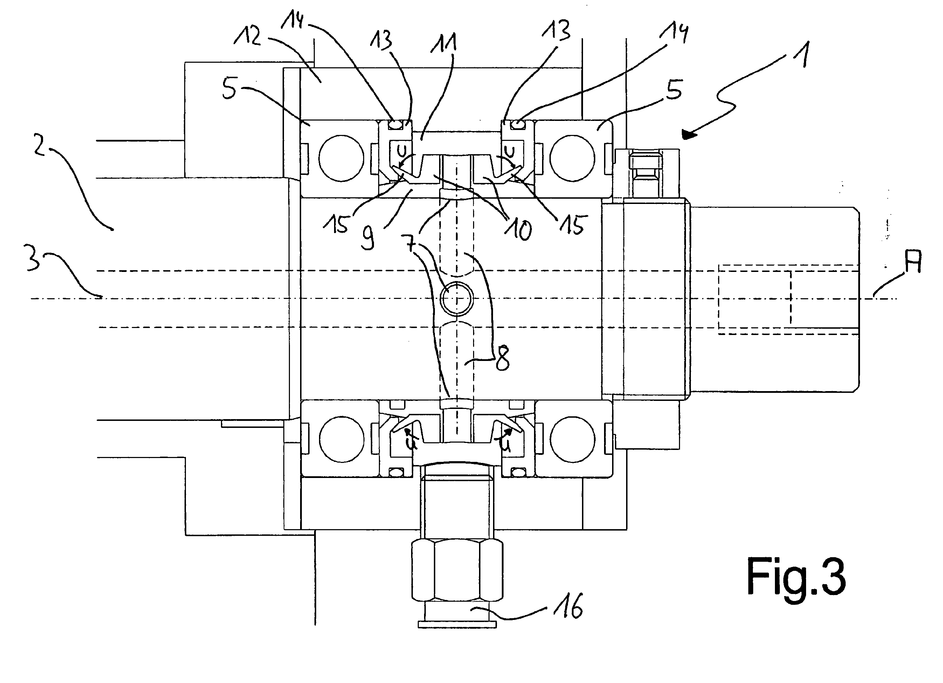

Bei einer Beaufschlagung des Druckraums 11 über die Zuführung 16 mit Druckluft wirkt auf die Wirkfläche 15' der jeweiligen Dichtlippe 15 aufgrund der sich aufbauenden Druckdifferenz zwischen dem Inneren des Druckraums 11 und der Umgebung eine Kraft, die dazu führt, dass die Dichtlippe 15 aus ihrer in Figur 2 dargestellten Ruhestellung durch eine Schwenkbewegung in der in Fig. 3 durch den Pfeil U bezeichneten Richtung in ihre in Figur 3 dargestellte Dichtstellung übergeht.

In der Dichtstellung liegt die Dichtlippe 15 mit ihrer der Wirkfläche 15' gegenüberliegenden Außenfläche 17 an der Wandung des Druckraums 11, genauer gesagt an der schräg stehenden Fläche 18 des Ringelements 13 an und dichtet somit den Druckraum 11 gegen die Umgebung ab.

Aufgrund der Abdichtung des Druckraums 11 können die Öffnungen 7 mit dem im Druckraum 11 herrschenden Druck beaufschlagt werden und die Druckluft über die Bohrungen 8 und den axialen Luftkanal 3 zur Aufweitung des Sleeves bereitgestellt werden.

Wird über die Zufuhr 16 keine Druckluft mehr in den Druckraum 11 eingebracht, so baut sich der im Druckraum 11 herrschende Überdruck über den axialen Luftkanal 3 und die Bohrungen in dem Zylinder ab. Da im druckfreien Zustand des Druckraums 11 keine durch Druckunterschiede bedingten Kräfte mehr auf die Wirkflächen 15' der Dichtlippen 15 wirken, kehren diese aufgrund ihrer Elastizität in die in Figur 2 dargestellte Ruhestellung zurück.

Erfindungsgemäß besteht folglich im druckfreien Zustand des Druckraums 11 kein Kontakt zwischen der mit dem Zylinder 2 rotierbaren Buchse 9 bzw. dem Dichtring 10 oder den Dichtlippen 15 und den ortsfesten Wandungen des Druckraums 11, so dass diese rotierenden Elemente 9, 10, 15 bei einer Rotation des Zylinders 2 keinem Verschleiß aufgrund eines schleifenden Kontakts mit ortsfesten Bauteilen, z.B. den Ringelementen 13 ausgesetzt sind.

Aufgrund der Elastizität der Dichtlippen 15 und der Anordnung der Wirkflächen 15' ist gewährleistet, dass bei einer Druckbeaufschlagung des Druckraums 11 ein automatischer Übergang der Dichtlippen 15 in die Dichtstellung erfolgt, in der ein dichtender Kontakt zwischen den Lippen 15 und der durch die Ringelemente 13 gebildeten seitlichen Wandung des Druckraums 11 besteht.

### BEZUGSZEICHENLISTE

- 1: Druckluftzufuhr
- 2: Druckzylinder
- 3: axialer Luftkanal
- 4: Axialverstellungseinheit
- 5: Wälzlager
- 6: Maschinenrahmen
- 7: Öffnungen
- 8: Bohrungen
- 9: Buchse
- 9a: Wulst
- 9b: Durchgangsbohrung in 9a
- 9c: Abschnitt Außenseite 9
- 9d: Stufe in Außenseite 9
- 9e: Abschnitt Außenseite 9
- 10: Dichtring
- 11: Druckraum
- 12: Bauteil, das 5 aufnimmt
- 13: Ringelemente
- 14: O-Ringe
- 15: Dichtlippen
- 15': Wirkflächen
- 16: Zuführung
- 17: Außenfläche 15
- 18: schräge Fläche von 13
- U: Übergangsrichtung von 15
- A: Achse von 2

## Patentansprüche

1. Rotierbare Walze (2) mit einer ortsfesten Druckluftzuführung (1), die in ihrer Mantelfläche wenigstens eine mit Druckluft zu beaufschlagende Öffnung (7) aufweist, wobei die Walze (2) im axialen Bereich der mit Druckluft zu beaufschlagenden Öffnung (7) in Umfangsrichtung zumindest abschnittsweise von einem ortsfesten, mit Druck beaufschlagbaren Druckraum (11) umgeben ist, wobei die Druckluftzuführung ein Dichtelement (10,15) umfasst,
**dadurch gekennzeichnet, dass**
das Dichtelement (10,15) durch Druckluftbeaufschlagung des Druckraums (11) von einer Ruhestellung in eine Dichtstellung und durch Druckentlasten des Druckraums (11) auf Umgebungsdruck von der Dichtstellung in die Ruhestellung bewegbar ist, wobei das Dichtelement (10,15) und der Druckraum (11) so ausgebildet sind, dass bei in Ruhestellung befindlichem Dichtelement (10,15) keine Verbindung zwischen der Walze (2) und den Wandungen des Druckraums (11) vorliegt und bei in Dichtstellung befindlichem Dichtelement (10,15) eine druckdichte Verbindung zwischen den Wandungen (13) des Druckraums (11) und der Walze (2) vorliegt, wobei das Dichtelement (10,15) wenigstens eine elastisch verformbare Dichtlippe (15) aufweist.

2. Rotierbare Walze (2) nach Anspruch 1
**dadurch gekennzeichnet, dass**
das Dichtelement (10,15) auf der Walze (2) angeordnet ist.

3. Rotierbare Walze (2) nach einem der vorangehenden Ansprüche
**dadurch gekennzeichnet, dass**
das Dichtelement (10,15) aus einem elastisch verformbaren Material besteht.

4. Rotierbare Walze (2) nach einem der vorangehenden Ansprüche
**dadurch gekennzeichnet, dass**
der Druckraum (11) zwischen zwei Wälzlagern (5) der Walze (2) angeordnet ist.

5. Rotierbare Walze (2) nach einem der vorangehenden Ansprüche
**dadurch gekennzeichnet, dass**
der Druckraum (11) in die Axialverstellungseinheit (4) für die Walze (2) integriert ist, so dass die Walze (2) in jedem axialen Einstellzustand mit Druckluft beaufschlagbar ist.

6. Rotierbare Walze (2) nach einem der vorangehenden Ansprüche
**dadurch gekennzeichnet, dass**
die Walze (2) in dem axialen Bereich, der von dem Druckraum (11) umgeben ist, auf ihrer Mantelfläche mehrere, gleichmäßig über den Umfang verteilte Öffnungen (7) aufweist.

7. Rotierbare Walze (2) nach einem der vorangehenden Ansprüche
**dadurch gekennzeichnet, dass**
das Dichtelement (10,15) eine Anlagefläche (17) aufweist, mit der es in seiner Dichtstellung dichtend an einer Wandung (13) des Druckraums (11) anliegt.

8. Rotierbare Walze (2) nach einem der vorangehenden Ansprüche
**dadurch gekennzeichnet, dass**
das Dichtelement eine Wirkfläche (15') aufweist, auf die bei einer Beaufschlagung des Druckraums (11) mit Druckluft aufgrund eines sich ausbildenden Druckunterschieds eine Kraft wirkt.

## Claims

1. A rotatable roller (2) with a stationary compressed air supply (1), said roller having at least one opening (7) in a mantle surface thereof operable to be loaded with compressed air, wherein the roller (2) is surrounded in the axial area of the opening (7) to be loaded with compressed air in the circumferential direction at least in one section by a stationary pressure chamber (11) that can be loaded with pressure, wherein the compressed air supply comprises a sealing element (10, 15),
**characterized in that**
the sealing element (10, 15) can be moved by loading the pressure chamber (11) with compressed air from a position of rest into a sealing position and by relieving the pressure of the pressure chamber (11) to ambient pressure from the sealing position into the position of rest, wherein the sealing element (10, 15) and the pressure chamber (11) are constructed such that when the sealing element (10, 15) is in the position of rest there is no connection between the roller (2) and the walls of the pressure chamber (11), and when the sealing element (10, 15) is in the sealing position there is a pressure-tight connection between the walls (13) of the pressure chamber (11) and the roller (2), wherein the sealing element (10, 15) comprises at least one elastically deformable sealing lip (15).

2. The roller (2) according to claim 1,
**characterized in that**
the sealing element (10, 15) is arranged on the roller (2).

3. The roller (2) according to one of the preceding claims,
**characterized in that**
the sealing element (10, 15) is made of an elastically deformable material.

4. The roller (2) according to one of the preceding claims,
**characterized in that**
the pressure chamber (11) is arranged between two roller bearings (5) of the roller (2).

5. The roller (2) according to one of the preceding claims,
**characterized in that**
the pressure chamber (11) is integrated into an axial adjustment unit (4) for the roller (2), so that the roller (2) can be loaded with compressed air in every axial adjustment state.

6. The roller (2) according to one of the preceding claims,
**characterized in that**
the roller (2) comprises several openings (7) uniformly distributed over a circumference on the mantle surface thereof in an axial area surrounded by the pressure chamber (11).

7. The roller (2) according to one of the preceding claims,
**characterized in that**
the sealing element (10, 15) has a contact surface (17) with which the sealing element (10, 15) rests in its sealing position on a wall (13) of the pressure chamber (11) in a sealing manner.

8. The roller (2) according to one of the preceding claims,
**characterized in that**
the sealing element has an active surface (15') on which a force acts when the pressure chamber (11) is loaded with compressed air on account of a developing pressure difference.

## Revendications

1. Cylindre rotatif (2) avec une amenée d'air comprimé stationnaire (1), dont la surface latérale présente au moins une ouverture (7) pouvant être alimentée en air comprimé, le cylindre (2) étant, dans la zone axiale de l'ouverture (7) pouvant être alimentée en air comprimé, entouré, au moins par sections, dans le sens de la circonférence, d'un espace de pression stationnaire pouvant être alimenté en pression, l'amenée d'air comprimé comprenant un élément d'étanchéité (10, 15),
**caractérisé en ce que**
l'élément d'étanchéité (10, 15) peut être déplacé depuis une position de repos vers une position d'étanchéité en alimentant l'espace de pression en air comprimé et depuis la position d'étanchéité vers la position de repos en réduisant la pression de l'espace de pression (11) jusqu'à la pression ambiante, l'élément d'étanchéité (10,15) et l'espace de pression (11) étant conçus de manière que lorsque l'élément d'étanchéité (10,15) se trouvant en position de repos, il n'y a pas de liaison entre le cylindre (2) et les parois de l'espace de pression (11) et que lorsque l'élément d'étanchéité (10, 15) se trouvant en position d'étanchéité, il y a une liaison étanche à la pression entre les parois (13) de l'espace de pression (11) et le cylindre (2), l'élément d'étanchéité (10, 15) présentant au moins une lèvre d'étanchéité (15) déformable élastiquement.

2. Cylindre rotatif (2) suivant la revendication 1,
**caractérisé en ce que**
l'élément d'étanchéité (10, 15) est disposé sur le cylindre.

3. Cylindre rotatif (2) suivant une des revendications précédentes
**caractérisé en ce que**
l'élément d'étanchéité (10, 15) est en une matière déformable élastiquement.

4. Cylindre rotatif (2) suivant une des revendications précédentes,
**caractérisé en ce que**
l'espace de pression (11) est disposé entre deux paliers à roulement (5) du cylindre (2).

5. Cylindre rotatif (2) suivant une des revendications précédentes,
**caractérisé en ce que**
l'espace de pression (11) est intégré dans l'unité de réglage axial (4) pour le cylindre (2), de manière que le cylindre (2) puisse être alimenté en air comprimé dans tous les états de réglage axial.

6. Cylindre rotatif (2) suivant une des revendications précédentes,
**caractérisé en ce que**
sur sa surface latérale le cylindre présente, dans la zone axiale qui est entourée de l'espace de pression (11), plusieurs ouvertures (7) réparties uniformément sur la circonférence.

7. Cylindre rotatif (2) suivant une des revendications précédentes,
**caractérisé en ce que**
l'élément d'étanchéité (10, 15) présente une surface d'appui (17), au moyen de laquelle il adhère, en position d'étanchéité, à une paroi (13) de l'espace de pression (11) de manière étanche.

8. Cylindre rotatif (2) suivant une des revendications précédentes,
**caractérisé en ce que**
l'élément d'étanchéité présente une surface active (15'), sur laquelle une force agit lorsque l'espace de pression (11) est alimenté en air comprimé, à cause d'une différence de pression qui se crée.
